# EUROPÄISCHE PATENTSCHRIFT

(11) **EP 0 573 785 B1**
(45) Veröffentlichungstag und Bekanntmachung des Hinweises auf die Patenterteilung: **06.08.1997**
(21) Anmeldenummer: 93107399.3
(22) Anmeldetag: 07.05.1993
(51) Int. Cl.: H02M 1/10, H02J 7/00, H04B 1/38

(54) **Stromversorgungsschaltung für ein Funkgerät**
Current supply circuit for radio equipment
Circuit d'alimentation en courant électrique pour un appareil radio

(30) Priorität: 09.06.1992 DE 4218852
(43) Veröffentlichungstag der Anmeldung: 15.12.1993
(73) Patentinhaber: ROBERT BOSCH GMBH, 70442 Stuttgart (DE)
(72) Erfinder: Ketterling, Hans-Peter, Dipl.-Ing., W-1000 Berlin 42 (DE)

(56) Entgegenhaltungen:
- DE-A- 3 410 719
- DE-A- 3 923 919
- GB-A- 2 143 094
- GB-A- 2 249 677
- US-A- 4 893 348

## Beschreibung

Die Erfindung geht von einer Stromversorgungsschaltung nach dem Oberbegriff des Anspruchs 1 aus.

Es ist eine Stromversorgungsschaltung für ein aus einer internen oder einer externen wiederaufladbaren Stromquelle zu speisendes Funkgerät bekannt. Diese Schaltung entspricht zwar den üblichen technischen Anforderungen, ist aber bezüglich des Schaltungsaufbaus aufwendig und bezüglich des Stromverbrauchs ungünstig.

Aus der DE-A 39 23 919 ist eine elektrische Versorgungsspannungsquelle zum Laden einer Sekundärversorgungsquelle bekannt geworden, bei dem der an ein elektronisches Gerät gelieferter Strom gemessen wird. Entsprechend dem Meßergebnis wird der von der elektronischen Einrichtung gelieferte Spannungspegel umgeschaltet. Dadurch wird erreicht, daß der Spannungswandler einmal für das elektrische Gerät eine vorzugsweise niedrigere Spannung liefert und andererseits zum Laden einer Sekundärbatterie auf eine höhere Spannung umgeschaltet wird. Dadurch kann die Sekundärbatterie auf eine höhere Spannung aufgeladen werden als die bei Betrieb der elektronischen Einrichtung benutzte Spannung, so daß die in der elektronischen Einrichtung erzeugte Wärme verringert wird.

Der Erfindung liegt die Aufgabe zugrunde, eine Stromversorgungsschaltung derart weiterzubilden, daß sie bei möglichst geringem technisch und wirtschaftlichen Aufwand eine optimale Nutzung des internen und des externen Akkumulators gewährleistet.

Diese Aufgabe wird durch die Stromversorgungsschaltung mit den Merkmalen des Anspruchs 1 gelöst. Die mit der Erfindung erzielbaren Vorteile bestehen vor allem darin, daß auch ein Nachladen des funkgeräteinternen Akkumulators bei vom Nennwert insbesondere nach unten abweichender Spannung des Fahrzeugakkumulators möglich ist und daß die Stromversorgungsschaltung insgesamt einen vergleichsweise geringen Stromverbrauch hat. Vorteilhafte Weiterbildungen der Erfindung ergeben sich aus den Unteransprüchen.

Ausführungsbeispiele der Erfindung sind in der Zeichnung an Hand mehrerer Figuren dargestellt und werden im folgenden näher erläutert.

Es zeigen
- Fig. 1: ein vereinfachtes Schaltbild einer erfindungsgemäßen Stromversorgungsschaltung,
- Fig. 2: ein Schaltbild eines Überspannungs- und Verpolungsschutzes,
- Fig. 3: A bis D je eine Schaltung eines Funkgeräte-Hauptschalters,
- Fig. 4A: ein Prinzipschaltbild eines Aufwärts-Spannungswandlers,
- Fig. 4B: ein Prinzipschaltbild eines Abwärts-Spannungswandlers,
- Fig. 5: ein komplettes Schaltbild eines Aufwärts-Abwärts-Spannungswandlers,
- Fig. 6: ein Schaltbild für die Ankopplung des funkgeräteinternen Akkumulators und
- Fig. 7: ein Schaltbild eines zweiten Halbleiterschalters.

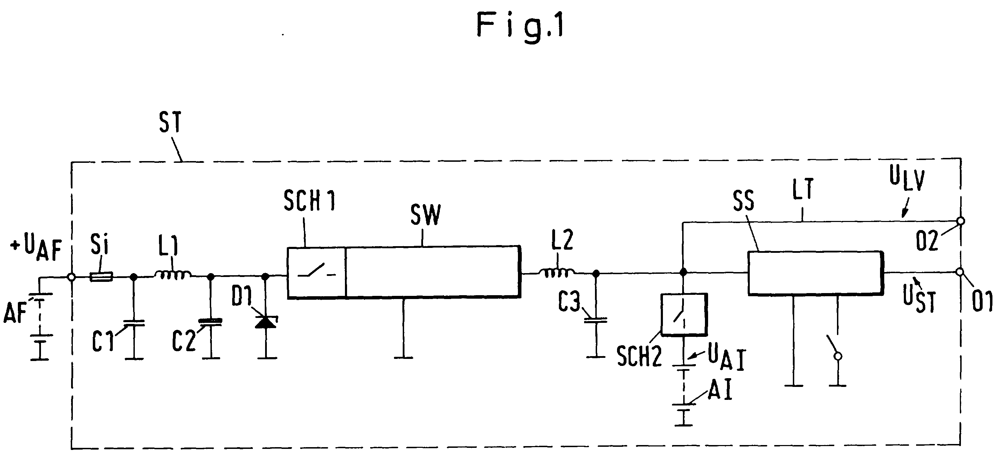

In Fig. 1 bezeichnet ST eine Stromversorgungsschaltung für ein Funkgerät, das wahlweise in einem Fahrzeug oder als tragbares Gerät verwendbar ist. Ein Fahrzeugakkumulator AF, dessen Spannung U_{AF} zum Beispiel 12 V beträgt, steht über eine Sicherung Si und ein π-Glied aus einer Serieninduktivität L1 und zwei Querkondensatoren C1 und C2 mit einem ersten Schalter SCH1 in Verbindung, an den sich ein Spannungswandler SW anschließt. Parallel zu dem zweiten Kondensator C2, das ist vorzugsweise ein Elektrolytkondensator, liegt eine als überspannungsschutz dienende, in Sperrichtung vorgespannte Diode D1, das ist zum Beispiel eine Zener-Diode, ein Varistor oder ein anderes spannungsbegrenzendes Bauelement, das mindestens kurzzeitig eine hohe Verlustleistung aufnehmen und damit kurzzeitig Überspannungsspitzen der Versorgungsspannung abfangen kann. Der erste Schalter SCH1 ist vorzugsweise ein Halbleiterschalter, der gleichzeitig als Funkgeräte-Hauptschalter und als aktives Element für den Spannungswandlers SW dient.

An den Spannungswandler SW schließt sich ein L-Glied aus einer zweiten Längsinduktivität L2 und einem mit Masse verbundenen dritten Kondensator C3 an. Von dem L-Glied L2, C3 zweigt erstens ein zweiter Schalter SCH2, das ist vorzugsweise ebenfalls ein Halbleiterschalter, ab, der über den funkgeräteinternen Akkumulator AI der Spannung U_{AI} mit Masse verbunden ist, zweitens eine Stabilisierungsschaltung SS mit einem ersten Ausgang 01 sowie drittens ein zweiter Ausgang 02.

Die Wirkungsweise der vorstehend beschriebenen und in Fig. 1 dargestellten Stromversorgungsschaltung ist folgende.

Die Sicherung Si ist vorzugsweise eine Schmelzsicherung, die die Hauptsicherung für die Stromversorgungsschaltung ST bzw. für das daran angeschlossene Funkgerät bildet. Das π-Glied L1, C1, C2 wirkt vorzugsweise als elektrischer Energiezwischenspeicher, aber gleichzeitig auch als Filter gegen vom Spannungswandler herrührende Störspannungen.

Die Diode D1 dient als Überspannungsschutz. Das L-Glied L2, C3 ist als Siebglied zur Unterdrückung der Schaltfrequenz des als geschalteter Wandler ausgebildeten Spannungswandlers SW vorgesehen. Der funkgeräteinterne Akkumulator AI wird über den zweiten Schalter SCH2 auf- bzw. nachgeladen, wenn die anstehende Spannung größer als die Spannung des Akkumulators AI ist. Dieser übt bei einer zu geringen Akkumulatorspannung U_{AF} des Fahrzeugakkumulators AF eine Stützfunktion aus. Die Spannung am Eingang der Stabilisierungsschaltung SS wird von dieser stabilisiert, so daß am ersten Ausgang 01 der Stromversorgungsschaltung ST eine stabilisierte Gleichspannung U_{ST} ansteht; an dem zweiten Ausgang 02 liegt eine unstabilisierte Gleichspannung U_{LV}, die zur Speisung eines HF-Leistungsverstärkers und gegebenenfalls anderer Verbraucher des an die Ausgänge 01 und 02 angeschlossenen Funkgerätes dient.

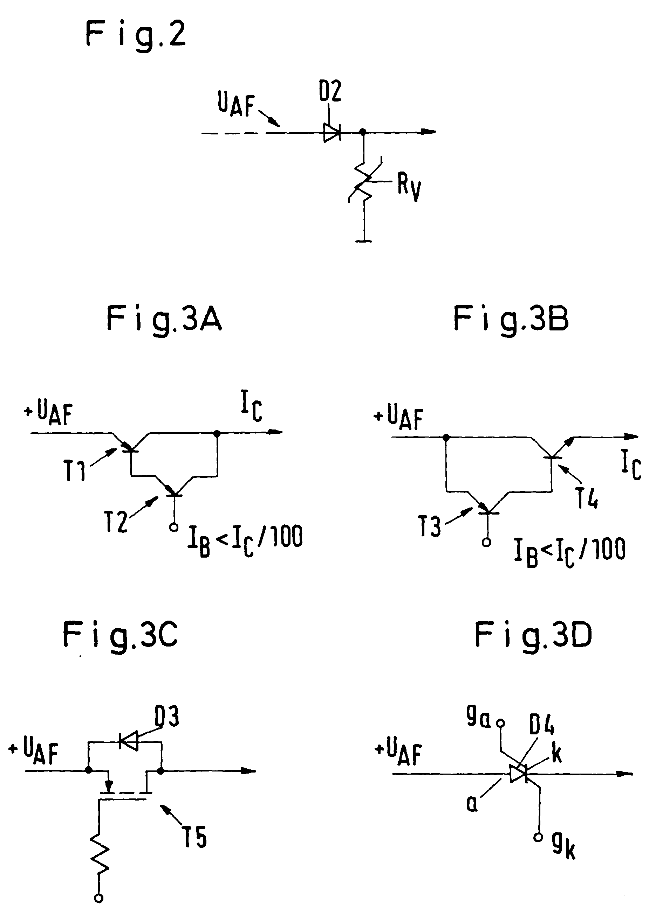

Nach Fig. 2 wird die nur einen Überspannungsschutz leistende Diode D1 gemäß Fig. 1 durch eine Längsdiode D2 und einen im Querzweig liegenden spannungsabhängigen Widerstand R_{V} (Varistor) ersetzt.

Der als Halbleiterschalter ausgebildete erste Schalter SCH1 gemäß Fig. 1 kann durch eine der Varianten nach den Fig. 3 A bis 3 D realisiert werden. Die Fig. 3 A und 3 B zeigen je eine Darlington-Schaltung mit je zwei bipolaren Transistoren T1, T2 bzw. T3, T4. Der Steuerstrom bzw. Basisstrom I_{B} zur Ansteuerung der Darlington-Schaltungen kann kleiner als ein Hundertstel des Kollektorstroms I_{C} sein. Einfache pnp-Leistungstransistoren würden zwar eine geringere Kollektor-Emitter-Restspannung erlauben, benötigen aber einen wesentlich höheren Basisstrom. Nach Fig. 3 C ist ein Leistungs-MOSFET T5 als Längstransistor des Spannungswandlers SW vorgesehen. Wird ein p-Kanal-MOSFET eingesetzt, so bildet die unvermeidliche Substratdiode D3 einen unerwünschten Entladungspfad für den funkgeräteinternen Akkumulator AI, wenn die zur Verfügung stehende Spannung U_{AF} unter die Spannung U_{AI} des funkgeräteinternen Akkumulators AI fällt, insbesondere dann, wenn die Fahrzeugbatterie beim Anlassen des Fahrzeugmotors ohnehin absinkt. Verwendet man einen n-Kanal-MOSFET, so ist gewöhnlich der Kanalwiderstand kleiner, aber das Substratdioden-Problem wird dadurch nicht umgangen; überdies wird eine Einschaltspannung benötigt, die größer als die Spannung U_{AF} ist; man kommt hierfür mit einer kleinen Spannungswandlung aus, die nicht viel Energie umsetzen, aber zusätzlich realisiert werden muß; es sei denn, man kann einen selbstsperrenden MOSFET verwenden. Falls die Kombination mit einer Längsdiode erwogen wird, ergibt sich auch bei kleineren Sättigungsspannungen leicht ein Gesamtspannungsabfall von etwa 1 V, das heißt, es kann dann auch der Einsatz eines löschbaren Thyristors (D4, Fig. 3 D) erwogen werden.

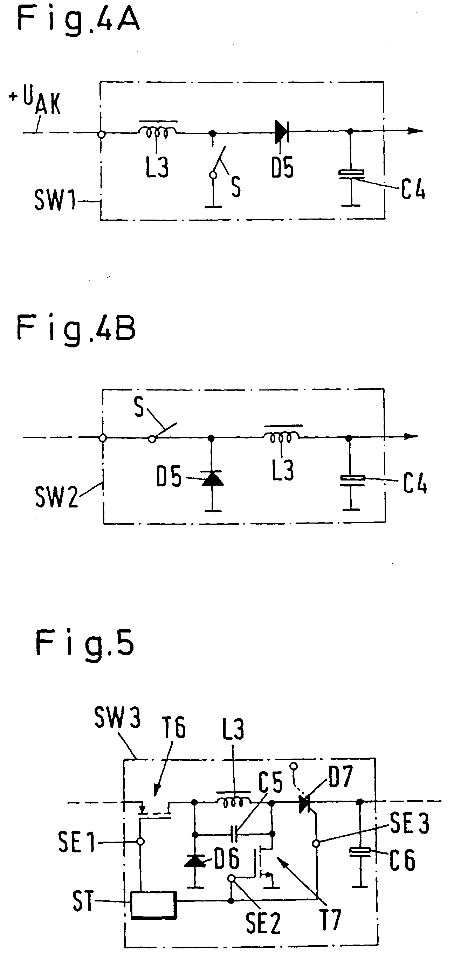

Ein in Fig. 4 A gezeigter geschalteter Spannungswandler SW1 ist ein Aufwärts-Spannungswandler, der zum besseren Verständnis der Fig. 5 erläutert wird und der eine Längsinduktivität L3 und eine dazu in Serie liegende Diode D5 aufweist, an die sich ein vierter Kondensator C4, der mit Masse verbunden ist, anschließt. Der vierte Kondensator C4 ist vorzugsweise ein Elektrolytkondensator. Ein periodisch betätigter Schalter S für den Spannungswandler liegt zwischen einem der dritten Induktivität L3 und der Diode D6 gemeinsamen Schaltungspunkt und Masse. Der Schalter S in Fig. 4 A wird vorzugsweise durch einen Halbleiterschalter gebildet.

Fig. 4 B zeigt, wie man die gleichen Bauelemente für den Aufbau eines Abwärts-Spannungswandlers SW2 nutzen kann.

In Fig. 5 ist ein aus einer Kombination der Schaltungen nach Fig. 4 A und 4 B gebildeter geschalteter Aufwärts-Abwärts-Spannungswandler SW3 gezeigt. Dieser weist eingangsseitig einen Längstransistor T6 auf. An den Längstransistor T6 schließen sich eine im Querzweig liegende Diode D6, eine dritte Längsinduktivität L3, die durch einen fünften Kondensator C5 überbrückt ist, ein mit diesem verbundener Quertransistor T7 und eine Längsdiode D7 an, das ist vorzugsweise ein löschbarer Thyristor oder Triac. Am Ausgang des Aufwärts-Abwärts-Spannungswandlers SW3 liegt ein sechster Kondensator C6, das ist vorzugsweise ein Elektrolytkondensator. Je nach der Höhe der Spannung U_{AF} des Fahrzeugakkumulators AF arbeitet der Spannungswandler SW3 entweder als Aufwärts- oder als Abwärtswandler. Die Steuerung übernimmt eine elektronische Steuerschaltung ST, die mit Steuereingängen SE1, SE2, SE3 der Schaltungselemente T6, T7 und D7 verbunden ist. Durch den Einsatz eines derartigen Wandlers kann man nicht nur den Energiebedarf des Sende-Leistungsverstärkers des Funkgerätes bei knapper Versorgungsspannung decken, sondern auch die für die Ladung des funkgeräteinternen Akkumulators AI erforderliche und gegenüber dem Entladefall deutlich höhere Ladespannung zur Verfügung stellen, ohne auf Kunstschaltungen, wie zum Beispiel paralleles Laden zweier Akkumulatorhälften oder dergleichen, zurückgreifen zu müssen. Anstelle eines Thyristors oder Triacs für die Diode D6 und D7 kann auch eine Schottky-Diode treten, die die notwendige kurze Schaltzeit bei kleiner Schwellspannung garantiert. Eine Vereinfachung der Schaltung nach Fig. 5 ist möglich, wenn man den Längstransistor T6 durch ein Leitungsstück ersetzt und die Diode D6 wegläßt, sofern die Abwärtsfunktion des Aufwärts-Abwärts-Spannungswandlers SW3 nicht benötigt wird. In diesem Fall muß die Diode D7 ein löschbarer, schneller Thyristor oder ein anderer elektronischer Schalter mit ähnlichen Eigenschaften sein. Wird dagegen nur die Abwärtsfunktion benötigt, so entfallen der Transistor T7 und die Diode D7. Der Längstransistor T6 oder ein löschbarer Thyristor oder Triac können gleichzeitig als Gerätehauptschalter dienen.

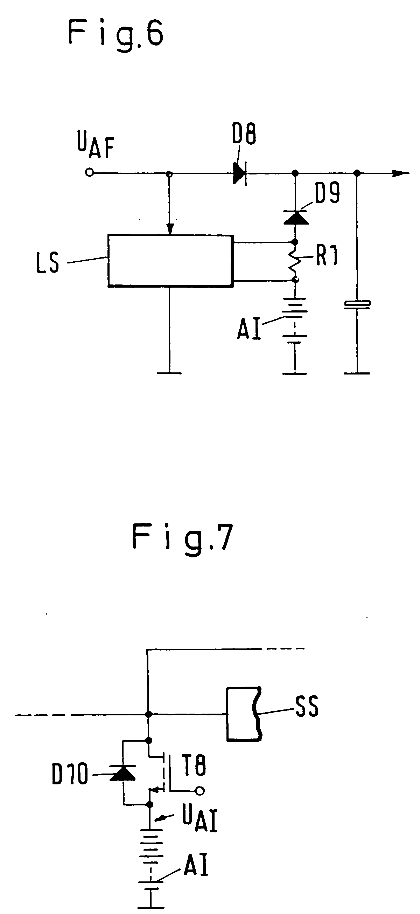

In Fig. 6 ist ein Beispiel einer Ankopplungsschaltung für den Akkumulator AI gemäß Fig. 1 gezeigt, die eine Längsdiode D8 und eine im Querzweig liegende Reihenschaltung aus einer Diode D9 und einem Widerstand R1 aufweist, mit der der Akkumulator AI in Serie liegt. Mit LS ist eine Ladeschaltung bezeichnet, die die Ankopplung steuert. Im Zusammenhang mit der Schaltung nach Fig. 5 kann die Funktion der Diode D8 gegebenenfalls von einem der anderen dort schon vorhandenen Bauelemente übernommen werden. Durch den Spannungsabfall an dem Widerstand R1 können Lade- und Entladestrom des Akkumulators AI gesteuert bzw. überwacht werden.

Nach Fig. 7 ist der zweite Schalter SCH2 gemäß Fig. 1 ein Quertransistor T8, der durch eine Diode D10 überbrückt ist, das ist vorzugsweise dessen Substratdiode. Als Transistor T8 eignet sich ein MOSFET.

## Patentansprüche

1. Stromversorgungsschaltung für ein Funkgerät, das bei Verwendung in einem Fahrzeug aus einem Fahrzeugakkumulator (AF) und bei tragbarer Verwendung aus einem funkgeräteinternen Akkumulator (AI) gespeist wird und das durch einen ersten Schalter (Sch1) der Stromversorgungsschaltung (ST) ein- oder ausschaltbar ist, wobei die Stromversorgungsschaltung (ST) einen geschalteten Spannungswandler (SW) zum Anpassen der Spannung (U_{AF}) des Fahrzeugakkumulators (AF) an mindestens eine für das Funkgerät benötigte Betriebsspannung (U_{LV}) und einen zweiten Schalter (SCH2) zum Herstellen eines Lade- und Stützstromkreises für den funkgeräteinternen Akkumulator (AI) umfaßt, wobei der erste Schalter (Sch1) und der zweite Schalter (Sch2) Halbleiterschalter sind und der erste Schalter (Sch1) gleichzeitig der Schalter für den geschalteten Spannungswandler (SW) ist.

2. Stromversorgungsschaltung nach Anspruch 1, dadurch gekennzeichnet, daß die Halbleiterschalter (SCH1, SCH2) MOSFET-Transistoren sind.

3. Stromversorgungsschaltung nach Anspruch 2, dadurch gekennzeichnet, daß der zweite Halbleiterschalter (T8) durch eine Substratdiode (D10) überbrückt ist.

4. Stromversorgungsschaltung nach einem der Ansprüche 1 bis 3, dadurch gekennzeichnet, daß der Spannungswandler (SW) ein Aufwärts-Spannungswandler (SW1), ein Abwärts-Spannungswandler (SW2) oder ein kombinierter Aufwärts-Abwärts-Spannungswandler (SW3) ist.

5. Stromversorgungsschaltung nach einem der Ansprüche 1 bis 4, dadurch gekennzeichnet, daß sich an den Spannungswandler (SW) ein L-Glied (L2, C3) und an dieses eine Spannungsstabilisierungsschaltung (SS) anschließt.

6. Stromversorgungsschaltung nach einem der Ansprüche 1 bis 5, dadurch gekennzeichnet, daß dem Spannungswandler (SW) eine im Querzweig liegende Diode (D1) zum Überspannungsschutz vorgeschaltet ist.

7. Stromversorgungsschaltung nach Anspruch 6, dadurch gekennzeichnet, daß die Diode (D1) eine Leistung-Zener-Diode oder eine Transient-Suppressor-Diode ist.

8. Stromversorgungsschaltung nach einem der Ansprüche 1 bis 7, dadurch gekennzeichnet, daß dem Spannungswandler (SW) eine Diode (D3) im Längszweig und ein spannungsabhängiger Leistungs-Widerstand oder Leistungsvaristor (R_{V}) vorgeschaltet ist.

## Claims

1. Power supply circuit for a radio unit which is fed from a vehicle battery (AF) when used in a vehicle and from a battery (AI) inside the radio unit when used portably and which can be switched on or off by a first switch (SCH1) of the power supply circuit (ST), the power supply circuit (ST) comprising a switched voltage transformer (SW) for matching the voltage (U_{AF}) of the vehicle battery (AF) to at least one operating voltage (U_{LV}) required for the radio unit, and a second switch (SCH2) for making a charging and support circuit for the battery (AI) inside the radio unit, the first switch (SCH1) and the second switch (SCH2) being semiconductor switches, and the first switch (SCH1) simultaneously being the switch for the switched voltage transformer (SW).

2. Power supply circuit according to Claim 1, characterized in that the semiconductor switches (SCH1, SCH2) are MOSFET transistors.

3. Power supply circuit according to Claim 2, characterized in that the second semiconductor switch (T8) is bridged by a substrate diode (D10).

4. Power supply circuit according to one of Claims 1 to 3, characterized in that the voltage transformer (SW) is a step-up voltage transformer (SW1), a step-down voltage transformer (SW2) or a combined step-up/step-down voltage transformer (SW3).

5. Power supply circuit according to one of Claims 1 to 4, characterized in that an L element (L2, C3) is connected to the voltage transformer (SW) and a voltage stabilization circuit (SS) is connected to the said L element.

6. Power supply circuit according to one of Claims 1 to 5, characterized in that a diode (D1) in the quadrature-axis arm is connected upstream of the voltage transformer (SW) for the purpose of overvoltage protection.

7. Power supply circuit according to Claim 6, characterized in that the diode (D1) is a power Zener diode or a transient suppressor diode.

8. Power supply circuit according to one of Claims 1 to 7, characterized in that a diode (D3) in the directaxis arm and a voltage-dependent power resistor or power varistor (R_{V}) are connected upstream of the voltage transformer (SW).

## Revendications

1. Circuit d'alimentation en courant électrique pour un appareil radio qui, dans le cas de son utilisation dans un véhicule, est alimenté à partir d'un accumulateur de véhicule (AF) et dans le cas d'une utilisation portative est alimenté à partir d'un accumulateur (AI) interne à l'appareil radio et qui peut être branché ou débranché par un premier interrupteur ((SCH1) 1) de circuit d'alimentation en courant électrique (ST),
caractérisé en ce que
le circuit d'alimentation en courant électrique (ST) comprend un transformateur de tension branché (SW) pour adapter la tension (U_{AF}) de l'accumulateur (AF) du véhicule à au moins une tension de fonctionnement (U_{LV}) nécessaire à l'appareil radio, et un deuxième interrupteur (SCH2) servant à établir un circuit de charge et de courant de soutien pour l'accumulateur (AI), interne à l'appareil radio le premier interrupteur (SCH1) et le second interrupteur (SCH2) étant des interrupteurs à semi-conducteurs et le premier interrupteur (SCH1) étant en même temps l'interrupteur du transformateur de tension branché (SW).

2. Circuit d'alimentation en courant électrique selon la revendication 1,
caractérisé en ce que
les interrupteurs à semi-conducteurs (SCH1, SCH2) sont des transistor MOSFET.

3. Circuit d'alimentation en courant électrique selon la revendication 2,
caractérisé en ce que
le second interrupteur à semi-conducteur (T8) est shunté par une diode de substrat (D10).

4. Circuit d'alimentation en courant selon l'une des revendications 1 à 3,
caractérisé en ce que
le transformateur de tension (SW) est un transformateur élévateur de tension (SW1), un transformateur abaisseur de tension (SW2) ou un transformateur de tension combiné (SW3) élévateur-abaisseur.

5. Circuit d'alimentation en courant selon l'une des revendications 1 à 4,
caractérisé en ce qu'
au transformateur de tension (SW) se raccorde une cellule en L (L2, C3) et à celle-ci se raccorde un circuit de stabilisation de tension (SS).

6. Circuit d'alimentation en courant selon l'une des revendications 1 à 5,
caractérisé en ce qu'
en avant du transformateur de tension (SW) est montée une diode (D1) se trouvant dans la branche en dérivation, diode qui sert à la protection contre les surtensions.

7. Circuit d'alimentation en courant selon la revendication 6,
caractérisé en ce que
la diode (D1) est une diode Zener de puissance ou une diode de surpression transitoire.

8. Circuit d'alimentation en courant selon l'une des revendications 1 à 7,
caractérisé en ce qu'
on monte, en avant du transformateur de tension (SW), une diode (D3) dans la branche de dérivation, et une résistance de puissance fonction de la tension ou un varistor de puissance (RV).
